# FASCICULE DE BREVET EUROPEEN

(11) **EP 2 859 200 B1**
(45) Date de publication et mention de la délivrance du brevet: **01.02.2017**
(21) Numéro de dépôt: 13723884.6
(22) Date de dépôt: 26.04.2013
(51) Int. Cl.: F01N 5/02, F02G 5/04, F02M 26/15, F02M 26/28, F02M 26/70, F02M 26/71, F02M 26/06

(54) **SYSTÈME DE RÉCUPÉRATION D'ÉNERGIE DANS UN CIRCUIT DE GAZ D'ÉCHAPPEMENT**
ABGASWÄRMERÜCKGEWINNUNGSSYSTEM
HEAT RECOVERY SYSTEM IN AN EXHAUST SYSTEM

(30) Priorité: 09.05.2012 FR 1254192
(43) Date de publication de la demande: 15.04.2015
(73) Titulaire: Valeo Systèmes de Contrôle Moteur, 95800 Cergy (FR)
(72) Inventeur: HODEBOURG, Grégory, F-78500 Sartrouville (FR); LEROUX, Samuel, F-78300 Poissy (FR)
(74) Mandataire: Garcia, Christine
(86) Numéro de dépôt international: PCT/FR2013/050935
(87) Numéro de publication internationale: WO 2013/167823

(56) Documents cités:
- EP-A1- 2 302 190
- EP-A1- 2 381 083
- EP-A2- 0 913 561
- WO-A1-2006/086419
- WO-A1-2010/020265
- WO-A1-2012/047209
- DE-A1- 10 115 594
- FR-A1- 2 885 178
- FR-A1- 2 920 834
- JP-A- 2008 121 616
- US-A1- 2011 131 961

## Description

L'invention se rapporte à un système de récupération d'énergie dans un circuit de gaz d'échappement. L'invention a pour cadre les moteurs thermiques de véhicule automobile, qui ont généralement besoin de gaz incidents pour assurer dans chaque chambre de combustion, en liaison avec le carburant injecté, une combustion satisfaisante, les gaz d'échappement issus de cette combustion étant ensuite rejetés dans l'atmosphère après avoir été dépollués. Or, il s'avère que ces gaz d'échappement qui sont portés à une certaine température, plutôt que d'être évacués du véhicule sans fonction particulière, peuvent être réutilisés au sein même dudit véhicule, pour par exemple participer au chauffage du véhicule ou pour être réacheminés vers les gaz incidents, afin d'améliorer les conditions de combustion dans chacune desdites chambres. L'invention se rapporte à un système de récupération d'énergie optimisé, fondé sur l'utilisation de ces gaz d'échappement.

Les dispositifs et procédés de récupération d'énergie existent et ont déjà fait l'objet de brevets. On peut, par exemple, citer le brevet EP 2 302 190 A1. On peut citer également le brevet FR2920834, qui se rapporte à un dispositif et à un procédé de recirculation des gaz d'échappement d'un moteur thermique. Un tel dispositif de recirculation des gaz met en oeuvre un conduit de dérivation reliant le conduit d'échappement au conduit d'admission, ledit conduit comportant un échangeur de chaleur pour le refroidissement des gaz recyclés. Un problème souvent rencontré avec ce type de configuration est que le niveau de pression des gaz dans le conduit d'échappement, n'est pas suffisamment élevé pour permettre auxdits gaz d'atteindre l'échangeur du conduit de dérivation avec un débit suffisant. Il en ressort que la quantité de gaz d'échappement réacheminée vers le conduit d'admission demeure peu maîtrisée et donc assez aléatoire, rendant la recirculation des gaz incertaine.

Les systèmes de récupération d'énergie selon l'invention sont configurés pour assurer en toutes circonstances de bonnes conditions de circulation des gaz d'échappement dans un conduit de dérivation prenant naissance dans le circuit d'échappement, et pouvant, par exemple, servir à réchauffer l'habitacle du véhicule ou à réacheminer les gaz d'échappement dans le circuit d'admission.

Afin de bien comprendre les caractéristiques de l'invention, il faut souligner que les termes « amont », « aval », « entrée » et « sortie » sont à considérer par rapport au sens de propagation des gaz. De même, il est supposé connu l'existence d'un circuit d'admission de gaz et un circuit d'échappement de gaz pour un moteur thermique.

L'invention a pour objet un système de récupération d'énergie dans un circuit d'échappement de gaz d'un moteur thermique de véhicule, ledit système comprenant un conduit de dérivation des gaz d'échappement doté d'un échangeur thermique. La principale caractéristique d'un système récupérateur d'énergie selon l'invention est que la partie du circuit d'échappement située en aval du point de raccordement du conduit de dérivation sur ledit circuit est munie d'une vanne apte à obturer au moins partiellement le circuit d'échappement. En effet, au cours de certaines phases d'utilisation du moteur, il arrive que la pression des gaz d'échappement ne soit pas suffisante, pour notamment faire circuler dans de bonnes conditions de débit lesdits gaz dans le conduit de dérivation. Pour ces phases, la vanne est alors pilotée pour se fermer, de manière à ce que l'ensemble des gaz d'échappement soit alors dévié avec une pression satisfaisante dans le conduit de dérivation doté de l'échangeur thermique. La fermeture de la vanne élimine un chemin de fuite des gaz dans le circuit d'échappement, et augmente donc la pression des gaz en amont de ladite vanne, qui vont alors transiter dans le conduit de dérivation. Le terme « vanne » est général, et peut désigner toutes sortes d'objets ou de dispositifs, capables d'ouvrir ou de fermer un conduit de gaz. Cette vanne peut par exemple être un doseur. Le conduit de dérivation est également un terme générique, pouvant par exemple désigner un conduit destiné à acheminer des gaz d'échappement vers le circuit d'admission du moteur. Le moteur thermique peut tout aussi bien être constitué d'un moteur à essence ou d'un moteur diesel. Le fait que la vanne puisse obturer complètement ou partiellement le circuit d'échappement permet une modulation importante du débit des gaz dans le conduit de dérivation, élargissant le spectre d'utilisation dudit conduit.

Avantageusement, la vanne comporte un volet monté pivotant, apte à être figé dans n'importe quelle position intermédiaire située entre une position d'ouverture maximale et une position de fermeture. Cette possibilité permet un meilleur contrôle du débit des gaz mis en oeuvre dans le circuit d'échappement et donc dans le conduit de dérivation. En effet, une vanne d'ouverture variable permet de régler avec précision lesdits débits, en fonction notamment de la phase d'utilisation du moteur.

De façon préférentielle, le circuit d'échappement comprend un filtre à particules situé en amont du point de raccordement du conduit de dérivation sur ledit circuit. Dans la plupart des circuits d'échappement de gaz existants, le filtre à particules se retrouve généralement implanté en aval du point de raccordement du conduit de dérivation dans ledit circuit. Dans le cadre d'un système de récupération d'énergie selon l'invention, ledit filtre a été reculé en amont dudit point de raccordement, pour être avantageusement remplacé par la vanne.

De façon avantageuse, le circuit d'échappement comprend un catalyseur placé en amont du filtre à particules.

Préférentiellement, le conduit de dérivation comprend à la sortie de l'échangeur une première canalisation débouchant dans le circuit d'admission et une deuxième canalisation débouchant dans le circuit d'échappement en aval de la vanne. Autrement dit, le conduit de dérivation peut être utilisé de deux façons différentes : soit comme un conduit de recyclage permettant d'amener les gaz d'échappement dans le circuit d'admission, en étant plus ou moins refroidis par l'échangeur afin de les mélanger aux gaz propres incidents, soit comme un conduit de récupération d'énergie à travers l'échangeur thermique, pour chauffer ou refroidir certains fluides du véhicule.

Avantageusement, le conduit de dérivation comprend à la sortie de l'échangeur, un dispositif de sélection apte à être piloté pour permettre aux gaz issus de l'échangeur de passer soit par la première canalisation, soit par la deuxième canalisation. En effet, puisque le débit des gaz d'échappement n'est pas suffisant pour permettre aux gaz à la sortie de l'échangeur de passer simultanément par la première canalisation et par la deuxième canalisation, le dispositif de sélection va privilégier soit le recyclage des gaz d'échappement vers le circuit d'admission, soit la récupération d'énergie avec réinjection des gaz dérivés dans le circuit d'échappement.

Selon un premier mode de réalisation préféré d'un système de récupération d'énergie selon l'invention, le dispositif de sélection comprend une vanne dotée d'un seul volet monté pivotant entre une première position pour laquelle il ouvre la première canalisation et ferme la deuxième canalisation, et une deuxième position pour laquelle il ouvre la deuxième canalisation et ferme la première canalisation. Il s'agit d'une configuration compacte, impliquant un mécanisme simplifié de vanne, mettant en oeuvre un seul volet d'obturation.

De façon préférentielle, le volet pivote entre les deux positions d'une valeur comprise entre 70° et 90°. Il s'agit d'une configuration facile à mettre au point, fiable et bien maîtrisée.

Avantageusement, l'échangeur thermique et la vanne du conduit de dérivation constituent un module monobloc. Un tel module favorise une certaine compacité de l'ensemble constitué par l'échangeur et ladite vanne.

Selon un deuxième mode de réalisation préféré d'un système de récupération d'énergie selon l'invention, le dispositif de sélection comprend une vanne dotée de deux volets mobiles en rotation, l'un étant placé dans la première canalisation et l'autre étant placé dans la deuxième canalisation, et chacun desdits volets peut être piloté pour passer d'une position d'ouverture maximale à une position de fermeture de la canalisation dans laquelle il est implanté. Par rapport à la configuration précédente, qui n'offrait en alternative qu'un seul chemin de passage pour les gaz, soit la première canalisation, soit la deuxième canalisation, cette configuration de vanne ajoute deux possibilités supplémentaires correspondant à une fermeture simultanée et une ouverture simultanée des deux canalisations.

De façon avantageuse, les deux volets sont pilotés indépendamment l'un de l'autre. De cette manière, cette configuration offre une multiplicité de configurations au niveau des différents passages gazeux et de leurs débits associés. Il en résulte une plus grande souplesse d'utilisation d'un système de récupération d'énergie selon l'invention.

Les systèmes de récupération d'énergie selon l'invention présentent l'avantage de créer une augmentation de la pression des gaz dans une canalisation, non pas au moyen d'une source énergétique supplémentaire, mais en obturant une autre canalisation. Il en résulte que lesdits systèmes sont peu encombrants et peu coûteux, tout en demeurant performants par rapport à l'objectif visé. Ils ont de plus l'avantage de mettre en oeuvre des vannes, dont le fonctionnement est bien maîtrisé et précis, rendant les systèmes de récupération d'énergie selon l'invention reproductibles et fiables.

On donne ci-après une description détaillée d'un système de récupération d'énergie selon l'invention en se référant aux figures 1 à 3.
- La figure 1 est une vue schématique d'une architecture de moteur dotée d'un circuit de gaz comprenant un système de récupération d'énergie selon l'invention,
- La figure 2 est une vue schématique d'un premier mode de réalisation préféré d'une vanne équipant un conduit de dérivation d'un système de récupération d'énergie selon l'invention,
- La figure 3 est une vue schématique d'un deuxième mode de réalisation préféré d'une vanne équipant un conduit de dérivation d'un système de récupération d'énergie selon l'invention.

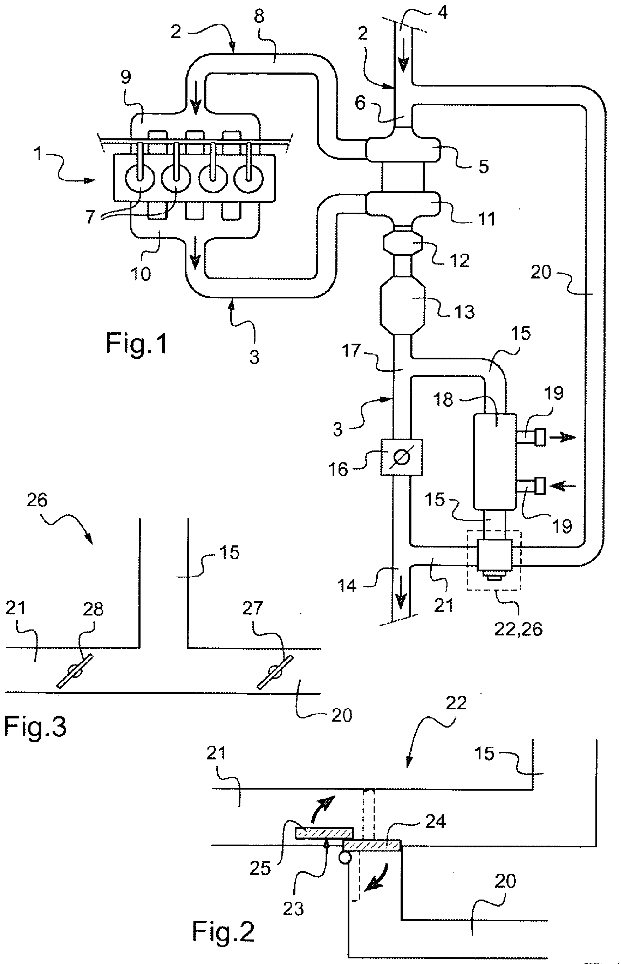

En se référant à la figure 1, un circuit de gaz d'un moteur 1 thermique comprend un circuit d'admission 2 situé en amont dudit moteur 1 et un circuit d'échappement 3 situé en aval de celui-ci. Le circuit d'admission 2 comprend schématiquement une entrée 4 d'air, alimentant en air un compresseur 5 via une tubulure 6 d'entrée, l'air suralimenté issu dudit compresseur 5 étant acheminé vers les chambres 7 de combustion dudit moteur 1, par l'intermédiaire d'un conduit 8 d'alimentation. Plus précisément, ce conduit d'alimentation 8 débouche dans un répartiteur d'admission 9 permettant de distribuer l'air dans chacune des chambres de combustion 7 du moteur 1. Cet air est indispensable pour assurer de bonnes conditions de combustion dans lesdites chambres 7. Les gaz d'échappement, qui ont été brûlés dans les chambres 7, sont évacués au moyen d'un répartiteur d'échappement 10 pour acheminer lesdits gaz vers une turbine 11, qui est couplée au compresseur 5. Les gaz en sortie de turbine 11 vont d'abord passer dans un catalyseur 12 puis dans un filtre 13 à particules, afin de nettoyer les gaz d'échappement, les gaz issus dudit catalyseur 13 pouvant alors être directement évacués vers l'extérieur du véhicule par la partie terminale 14 du circuit d'échappement 3, ou passer par un conduit de dérivation 15 prenant naissance sur le circuit d'échappement 3 en aval du filtre 13 à particules. Le circuit d'échappement 3 comporte une vanne 16 située en aval du point de raccordement 17 du conduit de dérivation 15 sur ledit circuit 3, ladite vanne 16 pouvant être pilotée pour ouvrir ou fermer la partie du circuit d'échappement 3 dans laquelle elle est implantée. Plus précisément, cette vanne 16 est munie d'un volet pivotant, conçu pour passer d'une position de complète ouverture à une position de fermeture, ledit volet pouvant être figé dans n'importe quelle position intermédiaire située entre ces deux positions extrêmes. Le conduit de dérivation 15 est équipé d'un échangeur thermique 18 relié par des tubulures de liaison 19 à un fluide caloporteur pouvant être par exemple logé dans un radiateur du véhicule, ledit échangeur 18 servant à refroidir les gaz d'échappement transitant par le conduit de dérivation 15. A la sortie de cet échangeur thermique 18, le conduit de dérivation 15 est prolongé par une première canalisation 20 de recyclage permettant d'acheminer les gaz d'échappement dans le circuit d'admission d'air 2, au niveau de la tubulure d'entrée 6, afin que lesdits gaz soient mélangés à l'air incident avant d'être envoyés dans les chambres 7 de combustion du moteur 1, et par une deuxième canalisation 21 permettant d'acheminer les gaz dans le circuit d'échappement 3, en aval de la vanne 16. Un système de récupération d'énergie selon l'invention, comprend le conduit de dérivation 15 doté de l'échangeur thermique 18 et prolongé par les deux canalisations 20,21, ainsi que la vanne 16 du circuit d'échappement 3.

En se référant à la figure 2, selon un premier mode de réalisation préféré d'un système de récupération d'énergie selon l'invention, le conduit de dérivation 15 dispose d'une première vanne 22, placée à la sortie de l'échangeur 18, et permettant d'acheminer les gaz de façon sélective soit vers la première canalisation 20, soit vers la deuxième canalisation 21. Cette première vanne 22 comprend un volet unique 23 monté pivotant autour d'un axe de rotation, et comprenant deux parties 24,25 situées de part et d'autre dudit axe. Dans une première position, une première partie 24 du volet 23 ouvre la première canalisation 20 et une deuxième partie 25 obture simultanément la deuxième canalisation 21. Dans une deuxième position, qui se déduit de la première position par une rotation de 90° (dans le présent exemple), la première partie 24 du volet 23 obture la première canalisation 20, tandis que la deuxième partie 25 ouvre la deuxième canalisation 21. Sur la figure 2, le volet 23 est montré dans sa deuxième position, et peut pivoter de 90° dans le sens indiqué par les deux flèches, pour se retrouver dans la première position. Pour ce mode de réalisation, l'échangeur thermique 18 et la première vanne 22 constituent un module monobloc, permettant de compacter ces éléments entre eux, et donc de réduire l'encombrement résultant. Ce regroupement de l'échangeur 18 et de la première vanne 22 en un seul et même module, permet également une meilleure manipulation, et permet audit échangeur 18 et à ladite première vanne 22 d'être assemblés à part, préalablement à leur montage sur le circuit d'échappement 3.

En se référant à la figure 3, selon un deuxième mode de réalisation préféré d'un système de récupération d'énergie selon l'invention, le conduit de dérivation 15 dispose d'une deuxième vanne 26, remplaçant la première vanne 22, et placée à la sortie de l'échangeur 18, ladite deuxième vanne 26 permettant d'acheminer les gaz de façon sélective soit vers la première canalisation 20, soit vers la deuxième canalisation 21. Cette deuxième vanne 26 met en oeuvre deux volets 27,28 montés pivotants, un premier volet 27 étant placé dans la première canalisation 20 et un deuxième volet 28 étant placé dans la deuxième canalisation 21. Chacun desdits volets 27, 28 peut être piloté indépendamment l'un de l'autre, entre une position de complète ouverture et une position de fermeture de la canalisation 20,21 dans laquelle il est implanté. Chaque volet 27,28 peut être figé dans toutes les positions intermédiaires situées entre ces deux positions extrêmes. Ce deuxième mode de réalisation préféré d'un système de récupération d'énergie selon l'invention permet de réaliser deux configurations supplémentaires par rapport au premier mode de réalisation ci-avant décrit, qui sont d'une part, une fermeture simultanée des deux canalisations 20,21, et d'autre part une ouverture simultanée desdites canalisations 20,21.

Un système de récupération d'énergie selon l'invention peut ainsi fonctionner selon deux modes :
- Un mode de récupération d'énergie pour lequel la vanne 16 ferme totalement ou partiellement le circuit d'échappement 3. Les gaz d'échappement passent majoritairement par le conduit 15 de dérivation avec un débit élevé, avant d'entrer dans l'échangeur thermique 18. La vanne 22,26 située à la sortie dudit échangeur 18 permet d'acheminer les gaz dans la deuxième canalisation 21, vers le circuit d'échappement 3 en aval de la vanne 16, après que les dits gaz chauds ont chauffé un fluide circulant dans l'échangeur 18.
- Un mode de recyclage des gaz d'échappement. Si la pression est suffisante, dans le cas par exemple d'une pleine charge moteur, une partie des gaz d'échappement passe naturellement par le conduit 15 de dérivation, avant d'être acheminés, grâce à la vanne 22,26 placée derrière l'échangeur 18, vers le circuit d'admission 2 via la première canalisation 20. Si la pression n'est pas suffisante, la vanne 16 du circuit d'échappement 3 se ferme au moins partiellement, pour augmenter la pression des gaz dans le conduit 15 de dérivation.

## Revendications

1. Système de récupération d'énergie dans un circuit d'échappement (3) de gaz d'un moteur thermique (1) de véhicule, ledit système comprenant un conduit (15) de dérivation des gaz d'échappement doté d'un échangeur thermique (18), la partie du circuit d'échappement située en aval du point (17) de raccordement du conduit (15) de dérivation sur ledit circuit (3) étant munie d'une vanne (16) apte à obturer au moins partiellement le circuit d'échappement (3),
et le conduit de dérivation (15) comprenant à la sortie de l'échangeur (18) une première canalisation (20) débouchant dans le circuit d'admission (2,6) et une deuxième canalisation (21) débouchant dans le circuit d'échappement (3) en aval de la vanne (16),
le conduit (15) de dérivation comprenant à la sortie de l'échangeur (18) un dispositif (22,26) de sélection apte à être piloté pour permettre aux gaz issus de l'échangeur (18) de passer soit par la première canalisation (20), soit par la deuxième canalisation (21),
le dispositif de sélection comprenant une vanne (22) dotée d'un seul volet (23) monté pivotant entre une première position, pour laquelle il ouvre la première canalisation (20) et ferme la deuxième canalisation (21), et une deuxième position, pour laquelle il ouvre la deuxième canalisation (21) et ferme la première canalisation (20),
le volet unique (23) étant monté pivotant autour d'un axe de rotation, **caractérisé en ce que** le volet comprenant deux parties 24,25 situées de part et d'autre dudit axe, les deux parties 24,25 s'étendent dans des plans parallèles.

2. Système de récupération d'énergie selon la revendication 1, la vanne (16) comportant un volet monté pivotant, apte à être figé dans n'importe quelle position intermédiaire situé entre une position d'ouverture maximale et une position de fermeture.

3. Système de récupération d'énergie selon l'une quelconque des revendications 1 ou 2, le circuit d'échappement (3) comprenant un filtre (13) à particules situé en amont du point (17) de raccordement du conduit (15) de dérivation sur ledit circuit (3).

4. Système de récupération d'énergie selon l'une des revendications précédentes, le volet (23) pivotant entre les deux positions d'une valeur comprise entre 70° et 90°.

5. Système de récupération d'énergie selon l'une quelconque des revendications précédentes, l'échangeur thermique (18) et la vanne (22) du conduit (15) de dérivation constituant un module monobloc.

## Patentansprüche

1. Energierückgewinnungssystem in einem Abgaskreislauf (3) eines Verbrennungsmotors (1) eines Fahrzeugs, wobei das System ein Umleitungsrohr (15) der Abgase enthält, das mit einem Wärmetauscher (18) versehen ist, wobei der Teil des Abgaskreislaufes, der sich stromabwärts hinter dem Anschlusspunkt (17) des Umleitungsrohrs (15) an den Kreislauf (3) befindet, mit einem Ventil (16) versehen ist, das den Abgaskreislauf (3) zumindest teilweise verschließen kann,
und wobei das Umleitungsrohr (15) am Ausgang des Tauschers (18) eine erste Rohrleitung (20), die in den Ansaugkreislauf (2, 6) mündet, und eine zweite Rohrleitung (21) enthält, die in den Abgaskreislauf (3) stromabwärts hinter dem Ventil (16) mündet,
wobei das Umleitungsrohr (15) am Ausgang des Tauschers (18) eine Auswahlvorrichtung (22, 26) enthält, die gesteuert werden kann, um es den vom Tauscher (18) stammenden Gasen zu erlauben, entweder durch die erste Rohrleitung (20) oder durch die zweite Rohrleitung (21) zu gehen,
wobei die Auswahlvorrichtung ein Ventil (22) enthält, das mit einer einzigen Klappe (23) versehen ist, die zwischen einer ersten Stellung, in der sie die erste Rohrleitung (20) öffnet und die zweite Rohrleitung (21) schließt, und einer zweiten Stellung schwenkbar montiert ist, in der sie die zweite Rohrleitung (21) öffnet und die erste Rohrleitung (20) schließt,
wobei die einzige Klappe (23) um eine Drehachse schwenkbar montiert ist, **dadurch gekennzeichnet, dass** wobei die Klappe zwei Teile (24, 25) enthält, die sich zu beiden Seiten der Achse befinden, wobei die zwei Teile (24, 25) sich in parallelen Ebenen erstrecken.

2. Energierückgewinnungssystem nach Anspruch 1, wobei das Ventil (16) eine schwenkbar montierte Klappe aufweist, die in einer beliebigen Zwischenstellung fixiert werden kann, die sich zwischen einer maximalen Öffnungsstellung und einer Schließstellung befindet.

3. Energierückgewinnungssystem nach einem der Ansprüche 1 oder 2, wobei der Abgaskreislauf (3) einen Partikelfilter (13) enthält, der sich stromaufwärts vor dem Anschlusspunkt (17) des Umleitungsrohrs (15) an den Kreislauf (3) befindet.

4. Energierückgewinnungssystem nach einem der vorhergehenden Ansprüche, wobei die Klappe (23) zwischen den zwei Stellungen um einen Wert zwischen 70° und 90° schwenkt.

5. Energierückgewinnungssystem nach einem der vorhergehenden Ansprüche, wobei der Wärmetauscher (18) und das Ventil (22) des Umleitungsrohrs (15) ein einteiliges Modul bilden.

## Claims

1. Energy recovery system in an exhaust gas circuit (3) of a vehicle heat engine (1), said system comprising an exhaust gas by-pass duct (15) fitted with a heat exchanger (18), the part of the exhaust circuit situated downstream of the connection point (17) of the by-pass duct (15) in said circuit (3) being fitted with a valve (16) capable of shutting off the exhaust circuit (3) at least partially,
and the by-pass duct (15) comprising at the exchanger outlet (18) a first system of channels (20) opening out into the intake circuit (2, 6) and a second system of channels (21) opening out into the exhaust circuit (3) downstream of the valve (16),
the by-pass duct (15) comprising at the exchanger outlet (18) a selection device (22, 26) capable of being controlled, in order to allow the gases emanating from the exchanger (18) to pass either through the first system of channels (20) or through the second system of channels (21),
the selection device comprising a valve (22) fitted with a single flap (23) mounted pivotably between a first position for which it opens the first system of channels (20) and closes the second system of channels (21) and a second position for which it opens the second system of channels (21) and closes the first system of channels (20),
the single flap (23) being mounted pivotably about a rotational axis, **characterized in that** the flap comprising two sections 24, 25 located on either side of said axis, the two sections 24, 25 extend in parallel planes.

2. Energy recovery system according to Claim 1, the valve (16) comprising a pivotably mounted flap capable of being fixed in any intermediate position situated between a maximum opening position and a closing position.

3. Energy recovery system according to either of Claims 1 and 2, the exhaust circuit (3) comprising a particle filter (13) located upstream of the connection point (17) of the by-pass duct (15) in said circuit (3).

4. Energy recovery system according to one of the preceding claims, the flap (23) pivoting between the two positions with a value of between 70° and 90°.

5. Energy recovery system according to any one of the preceding claims, the heat exchanger (18) and the valve (22) of the by-pass duct (15) forming a one-piece module.
